# EUROPÄISCHE PATENTANMELDUNG

(11) **EP 0 700 726 A1**
(43) Veröffentlichungstag der Anmeldung: **13.03.1996**
(21) Anmeldenummer: 95112662.2
(22) Anmeldetag: 11.08.1995
(51) Int. Cl.: B03B 9/06, B03B 13/00

(54) **Verfahren zur Wiederverwertung von in der zementverarbeitenden Industrie anfallenden Produktionsresten und Vorrichtung zur Durchführung des Verfahrens**

(30) Priorität: 06.09.1994 DE 4431632
(71) Anmelder: Azur-Fritz GmbH, D-75223 Niefern (DE)
(72) Erfinder: Fritz, Alexander, D-71686 Remseck (DE)
(74) Vertreter: Patentanwälte Bartels, Held und Partner

(57) **Zusammenfassung**

Bei der Wiederverwertung von in der zementverarbeitenden Industrie, insbesondere in Betonwerken, anfallenden Produktionsreste, werden diese zunächst in Grobmaterial und Restschlamm getrennt und zumindest letzterer dem Produktionsprozeß wieder zugeführt. Vor einer Einleitung in eine Mischanlage (10) wird zumindest die Dichte und die Masse des der Mischanlage (10) durch eine Leitung (9) hindurch zugeführten Restschlammes in einer Meßstrecke (11) der Leitung (9) gemessen und daraus der Feststoffanteil ermittelt.

## Beschreibung

Die Erfindung betrifft ein Verfahren zur Wiederverwertung von in der zementverarbeitenden Industrie, insbesondere in Betonwerken, anfallenden Produktionsresten, bei dem die Produktionsreste in Grobmaterialien und Restschlamm getrennt und dem Produktionsprozeß wieder zugeführt werden. Ferner betrifft die Erfindung eine Vorrichtung zur Durchführung dieses Verfahrens.

Für die Wiederverwertung von Produktionsresten, die in der zementverarbeitenden Industrie und insbesondere in Betonwerken sowohl als Überschüsse als auch bei der Reinigung der Produktions- und Transporteinrichtungen anfallen, ist es bekannt, zunächst Grobmaterialien mit einer Körnung von beispielsweise über 0,2 mm von den übrigen Materialien durch ein Wasch-, Absetz- oder Siebverfahren zu trennen und das übrige Material, das ein Gemisch aus Wasser und Zement-Feinstteilen ist, entweder in einem Homogenisierungsbehälter oder in einem Sedimentationsbehälter zu speichern. Aus dem Homogenisierungsbehälter wird das Gemisch, aus dem Sedimentationsbehälter der konzentrierte Schlamm, in der Regel auch das Klärwasser, in die Mischanlage gepumpt. Da die Produktionsrückstände unregelmäßig anfallen und die Produktion selbst diskontinuierlich abläuft, ist der Trockensubstanzanteil in den Speicherbehältern erheblichen Veränderungen unterworfen. Selbst wenn die Menge bestimmt wird, die dem Speicherbehälter entnommen und der Mischanlage zugeführt wird, schwankt das Verhältnis von Zement-Feinstteilen zu Wasser erheblich. Da dies zu einer Qualitätsminderung der Produkte führen kann, wird vorsorglich der Mischanlage nur relativ wenig Restschlamm zugeführt. In Werken, die Betonfertigprodukte herstellen und Verarbeitungsverfahren wie Schleifen und Sägen anwenden, kann die Abwasser- und Restschlamm-Menge sehr groß sein. Deshalb hat man bisher einen erheblichen Teil der Produktionsreste eingedickt bzw. abgepreßt, um ein stichfestes Material zu erhalten, das auf Deponien gelagert werden kann.

Der Erfindung liegt die Aufgabe zugrunde, ein Verfahren anzugeben, das ermöglicht, wesentlich größere Mengen der Produktionsreste, welche in der zementverarbeitenden Industrie anfallen, dem Produktionskreislauf wieder zuführen zu können, ohne Qualitätseinbußen der Endprodukte in Kauf nehmen zu müssen. Diese Aufgabe löst ein Verfahren mit den Merkmalen des Anspruches 1.

Das erfindungsgemäße Verfahren ermöglicht es, aufgrund des Dichtemeßwertes exakt zu bestimmen, wieviel Trockensubstanz und wieviel Wasser in dem für eine Rückführung in die Mischanlage zur Verfügung stehenden Gemisch enthalten sind. Sowohl die Wassermenge als auch die Trockensubstanzmenge können problemlos entsprechend der Rezeptur berücksichtigt werden, weshalb man der Mischanlage die maximale Menge an Restschlamm zuführen kann, ohne die Qualität des Betons und der aus diesem hergestellten Produkte zu beeinträchtigen.

Sofern relativ stark getrübtes Klärwasser der Mischanlage zugeführt wird, kann man im Hinblick auf eine möglichst genaue Ermittlung der Trockensubstanz außer der Dichte des Restschlammes auch diejenige des Abwassers messen und hieraus den Feststoffanteil bestimmen.

Bei einer bevorzugten Ausführungsform wird die Dichte-Messung in Form einer berührungslosen radiometrischen Messung ausgeführt.

Vorzugsweise werden entsprechend der Rezeptur Sollwerte für die Trockensubstanzmenge und die Wassermenge in der Mischanlagensteuerung vorgegeben, damit diese bei Erreichen des einen Sollwertes die Zuführung von Restschlamm oder Klärwasser stoppt. Die noch fehlende Menge desjenigen Anteils, welcher den Sollwert noch nicht erreicht hat, kann dann durch Zuführen, z.B. von Frischwasser, Sand oder Zement, ergänzt werden.

Der Erfindung liegt auch die Aufgabe zugrunde, eine vorteilhafte Vorrichtung zur Durchführung des erfindungsgemäßen Verfahrens zu schaffen. Diese Aufgabe löst eine Vorrichtung mit den Merkmalen des Anspruches 1.

Wird nicht nur Restschlamm, sondern sowohl Restschlamm als auch noch Feststoffe enthaltendes Klärwasser der Mischanlage getrennt zugeführt, kann man beide Zuleitungen mit den für die Dichtemessung und die Mengenmessung erforderlichen Meßelementen ausgerüstet.

Zur Verarbeitung der von den Meßelementen gelieferten Daten ist vorzugsweise ein Rechner vorgesehen, bei dem es sich um den Zentarlrechner der Mischanlage handeln kann. Dieser Rechner steuert vorzugsweise die Pumpen, mittels deren der Restschlamm und/oder das Klärwasser in die Mischanlage gepumpt werden. Der Rechner kann dann die entsprechende Pumpe abschalten, sobald die Maximalmenge der Mischanlage zugeführt worden ist.

Im folgenden ist die Erfindung anhand von zwei in der Zeichnung dargestellten Ausführungsbeispielen im einzelnen erläutert.
Es zeigen
- Fig. 1: eine schematische Darstellung des ersten Ausführungsbeispiels,
- Fig. 2: eine schematische Darstellung des zweiten Ausführungsbeispiels.

Eine Vorrichtung zur Wiederverwertung von in einem Betonwerk anfallenden Produktionsresten, bei denen es sich nicht nur um Produktionsüberschüsse, sondern auch solche Produktionsreste handelt, die bei der Reinigung der Produktions- und Transporteinrichtungen, beispielsweise der Reinigung von Fahrmischern 1, anfallen, weist einen Waschtrog 2 auf, in welchen, gegebenenfalls mit geklärtem Brauchwasser verdünnt, die Produktionsreste eingegeben werden. Die im Waschtrog 2 vorgesehene Dosierschnecke 3 entmischt den Beton im Wasserbad des Waschtroges und führt die Sand- und Kiesbestandteile einer Austrags- und Entwässerungsschnecke 4 zu, von der sie ausgetragen werden. Die im Waschtrog 2 ausgeschwemmten Zement- und Feinsandpartikel gelangen in einen unter dem Waschtrog 2 angeordneten Pumpensumpf 5. Eine am Grund des Pumpensumpfes 5 angeordnete Pumpe 6 födert die sich im Pumpensumpf 5 ansammelnde Suspension in einen Klärturm 7.

Im Klärturm 7 erfolgt eine Sedimentation der Partikel, wodurch sich im Unterteil des Klärturmes 7 der Klärschlamm ansammelt. Darüber befindet sich das infolge der Sedimentation geklärte Wasser. Dieses kann mit Hilfe einer Leitung 16 im oberen Teil des Klärturmes 7 entnommen und als Brauchwasser benutzt werden.

Mittels einer am unteren Ende des Klärturmes 7 vorgesehenen Pumpe 8 kann über eine Leitung 9 einer Mischanlage 10, in der ein Betongemisch erzeugt wird, zugeführt werden. Um den Trockensubstanzanteil des durch die Leitung 9 hindurch der Mischanlage 10 zugeführten Restschlammes genau bestimmen zu können, befindet sich in dieser Leitung 9 eine Meßstrecke 11, in der mittels eines radiometrischen Meßelementes berührungslos die Dichte des in der Leitung 9 fließenden Restschlammes ermittelt wird. Außerdem ist die Leitung 9 mit einer Meßeinrichtung 12 zur Ermittelung der Menge oder Masse des durchgeflossenen Klärschlammes ausgerüstet. Im Ausführungsbeispiel ist die Meßeinrichtung 12 der Meßstrecke 11 nachgeordnet und mit einem Durchfluß- oder Wiegeelement ausgerüstet.

Sowohl der vom radiometrischen Meßelement der Meßstrecke 11 ermittelte Meßwert als auch der von der Meßeinrichtung 12 ermittelte Meßwert werden dem Zentralrechner 13 der Mischanlage zugeführt, in dem die erforderlichen Mischprogramme abgelegt sind. Wenn der Zentralrechner 13 das ausgewählte Mischprogramm startet, vergleicht er die von der Meßstrecke 11 und der Meßeinrichtung 12 gelieferten Istwerte und die sich hieraus ergebende Feststoff- und Wassermenge mit den im Programm vorgegebenen Sollwerten für Feststoffe und Wasser. Sobald einer dieser beiden Sollwerte erreicht ist, schaltet der Zentralrechner 13 die Pumpe 8 ab, wodurch die Zufuhr von Restschlamm zur Mischanlage 10 beendet wird. Außerdem veranlaßt der Zentralrechner 13 nun die Zuführung der noch fehlenden Mischbestandteile. Hierbei kann es sich um Frischwasser oder Klärwasser aus dem Klärturm 7 handeln, das durch eine Leitung 14 hindurch zugeführt wird, die in die Mischanlage 10 mündet und mit einem Ventil 15 versehen ist, das vom Rechner 13 gesteuert wird.

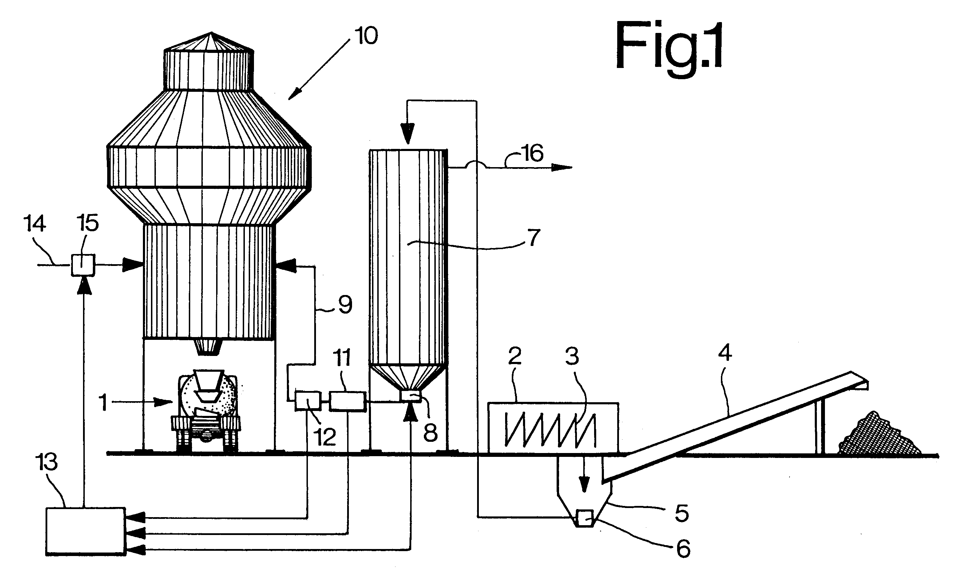

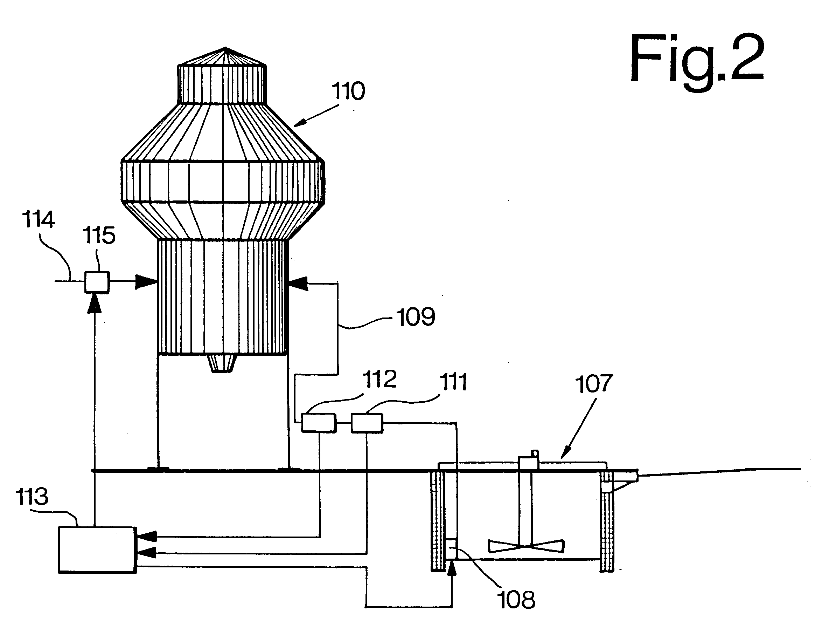

Das in Fig. 2 dargestellte Ausführungsbeispiel unterscheidet sich von demjenigen gemäß Fig. 1 dadurch, daß der von Grobmaterialien getrennte Teil der Produktionsreste nicht in einem Klärturm gespeichert wird, sondern in einem Rührwerksbecken 107. Von hier aus wird die aus Wasser und Feinstpartikeln bestehende Suspension mittels einer Pumpe 108 durch eine Leitung 109 in eine Mischanlage 110 eingeleitet. Wie bei dem ersten Ausführungsbeispiel sind an der Leitung 109 hintereinander eine Meßstrecke 111 mit einem radiometrischen Meßelement zur Ermittlung der Dichte und eine Meßeinrichtung 112 zur Ermittlung der Masse der zur Mischanlage 110 geförderten Suspension enthalten. Die Meßwerte werden dem Zentralrechner 113 der Mischanlage 110 zugeführt, welcher aufgrund dieser Meßwerte die Feststoff- und Wassermenge ermittelt und mit den vom Mischprogramm vorgegebenen Sollwerten vergleicht. Ist einer der beiden Sollwerte erreicht, schaltet der Zentralrechner 113 die Pumpe 108 ab. Außerdem veranlaßt er die Zuführung der noch fehlenden Mischbestandteile. Deshalb ist auch bei diesem Ausführungsbeispiel eine Frisch- oder Klärwasserleitung 114 mit einem Ventil 115 vorgesehen, das vom Zentralrechner 113 gesteuert wird.

## Patentansprüche

1. Verfahren zur Wiederverwertung von in der zementverarbeitenden Industrie, insbesondere in Betonwerken, anfallenden Produktionsreste, bei dem die Produktionsreste in Grobmaterial und Restschlamm getrennt und zumindest letzterer dem Produktionsprozeß wieder zugeführt wird, dadurch gekennzeichnet, daß vor einer Einleitung in eine Mischanlage zumindest die Dichte und die Masse des der Mischanlage zugeführten Restschlammes gemessen und daraus der Feststoffanteil ermittelt werden.

2. Verfahren nach Anspruch 1, dadurch gekennzeichnet, daß auch die Dichte und Masse des der Mischanlage zugeführten, bei der Behandlung der Produktionsreste anfallenden Abwassers gemessen und daraus dessen Feinstoffgehalt ermittelt werden.

3. Verfahren nach Anspruch 1 oder 2, dadurch gekennzeichnet, daß die Dichtemessung berührungslos radiometrisch erfolgt.

4. Verfahren nach einem der Ansprüche 1 bis 3, dadurch gekennzeichnet, daß die Einleitung von Abwasser und/oder Restschlamm in die Mischanlage beendet wird, wenn ein vorgegebener Sollwert erreicht ist.

5. Vorrichtung zur Durchführung des Verfahrens nach Anspruch 1, dadurch gekennzeichnet, daß eine zur Mischanlage (10; 110) führende Leitung (9; 109) für den Restschlamm eine Meßstrecke (11; 111) mit einem die Dichte berührungslos messenden radiometrischen Meßelement sowie eine Massenmeßeinrichtung (12; 112) mit einem Durchflußmeß- oder Wiegeelement aufweist.

6. Verfahren nach Anspruch 5, dadurch gekennzeichnet, daß eine zur Mischanlage führende Leitung für Abwasser die gleichen Meßeinrichtungen aufweist wie die der Zufuhr von Restschlamm zur Mischanlage dienende Leitung.

7. Vorrichtung nach Anspruch 5 oder 6, dadurch gekennzeichnet, daß jedes vorhandene Meßelement an einen Rechner (13; 113) angeschlossen ist.

8. Vorrichtung nach Anspruch 7, dadurch gekennzeichnet, daß der Rechner der Zentralrechner (13; 113) der Mischanlage (10; 110) ist.

9. Vorrichtung nach Anspruch 7 oder 8, dadurch gekennzeichnet, daß für jede zur Mischanlage (10; 110) führende Leitung (9; 109) eine vom Rechner (13; 113) gesteuerte Pumpe (8; 108) vorgesehen ist.
